# EUROPEAN PATENT SPECIFICATION

(11) **EP 3 808 515 B1**
(45) Date of publication and mention of the grant of the patent: **24.05.2023**
(21) Application number: 19819846.7
(22) Date of filing: 05.06.2019
(51) Int. Cl.: B25J 15/06, B65H 3/08

(54) **TRANSPORT DEVICE AND FETCHING UNIT**
TRANSPORTVORRICHTUNG UND ABHOLVORRICHTUNG
DISPOSITIF DE TRANSPORT ET UNITÉ D'EXTRACTION

(30) Priority: 14.06.2018 JP 2018113285
(43) Date of publication of application: 21.04.2021
(73) Proprietor: Amada Co., Ltd., Isehara-shi, Kanagawa 259-1196 (JP)
(72) Inventor: SATO Masaaki, Isehara-shi, Kanagawa 259-1196 (JP); TAKAHASHI Yuki, Isehara-shi, Kanagawa 259-1196 (JP); IWANAGA Hiroshi, Isehara-shi, Kanagawa 259-1196 (JP)
(74) Representative: Grünecker Patent- und Rechtsanwälte PartG mbB
(86) International application number: PCT/JP2019/022300
(87) International publication number: WO 2019/239979

(56) References cited:
- DE-A1-102014 015 736
- JP-A- S4 926 970
- JP-A- H01 156 242
- JP-A- H02 198 933
- JP-A- S60 242 144
- JP-A- 2002 193 463
- JP-A- 2012 086 950
- JP-A- 2013 203 516
- JP-B1- S4 922 190
- US-A- 5 676 364
- US-A1- 2002 096 815
- US-A1- 2006 043 747
- US-B1- 6 345 818

## Description

### Technical Field

The following disclosure relates to a transport device for stacked workpieces such as metal plates and a unit used for the transport device.

### Background Art

In order to transport plate-shaped workpieces one by one using a transport device, it is necessary to pick up the workpieces one by one from the top of the stacked workpieces. A transport device with a function of picking up workpieces one by one (hereinafter, referred to as a picking-up function) has been proposed. The proposed transport device is as follows, for example.

The transport device includes a carrier that can move in a transport direction and an opposite direction thereof and can be lifted and lowered (can move in an up-down direction). The carrier includes a plurality of main pads for sucking surfaces of workpieces provided at intervals. Also, a swinging member is provided at the carrier on the side of an end portion thereof so as to be able to swing in the up-down direction, and an auxiliary pad that sucks a surface of a workpiece on the side of an end portion thereof is provided at the swinging member on the side of a distal end portion. Further, an actuator such as an air cylinder that causes the swinging member to swing in the up-down direction is provided at an appropriate position in the carrier (see Patent Literatures 1 and 2).

Therefore, the auxiliary pad is lifted by causing the swinging member to swing in the upper direction through driving of the actuator in a state in which the surface of the workpiece at the top of the stacked workpiece is sucked by the plurality of main pads and the auxiliary pads. Then, the workpiece at the top on the side of an end portion is rolled up and is partially separated from the other workpieces. Then, the carrier is lifted to pick up the workpiece at the top one by one.

Related arts include those disclosed in Patent Literature 1 and Patent Literature 2, and as well Patent Literature 3 and Patent Literature 4. Patent Literature 5 discloses the preamble of independent claim 1.

### Citation List

### Patent Literature

Patent Literature 1: Japanese Patent Laid-Open No. 2003-361139
Patent Literature 2: Japanese Patent Laid-Open No. 7-330179
Patent Literature 3: Japanese Patent Laid-Open No. 2016-112667
Patent Literature 4: Japanese Patent Laid-Open No. 2017-124469
Patent Literature 5: US 2002/096815 A1

### Summary

Incidentally, a specially designed actuator is needed to add a picking-up function to a transport device as described above. Therefore, the number of drive sources such as actuators used for the transport device increases, which leads to a complicated configuration of the transport device. Also, an inertial force working on the carrier increases in accordance with the weight of the specially designed actuator during the transport of the workpiece, and it is difficult to determine a transport position of the workpiece at a high speed with high precision.

The device disclosed below has been made in view of providing a transport device with novel configurations capable of solving the aforementioned problem.

The present invention is defined in independent claim 1. Preferred embodiments are laid down in the dependent claims. According to an aspect, there is provided a transport device including: a main pad coupled to the carrier and configured to suck a workpiece; a swinging member axially supported by the carrier so as to be able to swing around a swinging shaft; a contact element configured to be lifted and lowered along with the carrier and come into contact with the workpiece; a first auxiliary pad supported by the swinging member at a position distal to the carrier as compared with the swinging shaft and configured to suck the workpiece, the first auxiliary pad being able to contract toward the workpiece; and a second auxiliary pad supported by the swinging member at a position proximal to the carrier as compared with the swinging shaft and configured to suck the workpiece, the second auxiliary pad being able to contract toward the workpiece by a stroke amount larger than a stroke amount of the first auxiliary pad.

### Brief Description of Drawings

[Figure 1] Figure 1 is a diagram illustrating a part of an articulated robot according to an embodiment.
[Figure 2] Figure 2 is a side view illustrating a robot hand according to an embodiment.
[Figure 3] Figure 3 is a view of the robot hand when seen from the side of main pads, according to an embodiment.
[Figure 4] Figure 4 is a perspective view of the robot hand when seen from the side of the main pads, according to an embodiment.
[Figure 5A] Figure 5A is a side view of a picking-up unit according to an embodiment.
[Figure 5B] Figure 5B is a bottom view of the picking-up unit according to an embodiment.
[Figure 6A] Figure 6A is a plan view of the picking-up unit according to an embodiment.
[Figure 6B] Figure 6B is a diagram illustrating an internal structure of the picking-up unit according to an embodiment, from which one of securing plates has been removed.
[Figure 7A] Figure 7A is a diagram illustrating a state immediately before sucking operations of the main pads and the like are started.
[Figure 7B] Figure 7B is a diagram illustrating a state immediately after the sucking operations of the main pads and the like are started.

### Description of Embodiments

Some illustrative embodiments will be described below with reference to the accompanying drawings.

Throughout the following description and the claims, the term "transport direction" means a direction that is any horizontal direction in general and a direction in which a workpiece is to be transported.

"Provided" includes, in addition to a meaning that an element is provided directly at another element, a meaning that an element is provided indirectly at another element via a different member. A "hand lengthwise direction" refers to a lengthwise direction of a robot hand and has the same meaning as those of a lengthwise direction of a hand body (carrier) and a lengthwise direction of a picking-up unit. A "hand widthwise direction" refers to a widthwise direction of the robot hand and has the same meaning as those of a widthwise direction of the hand body (carrier) and a widthwise direction of the picking-up unit. A "hand height direction" refers to a height direction of the robot hand and has the same meaning as those of a height direction of the hand body (carrier) and a height direction of the picking-up unit.

In the drawings, "FF" denotes the front direction, "FR" denotes the back direction, "U" denotes the upper direction, and "D" denotes the lower direction. "HA" denotes the hand lengthwise direction, "HB" denotes the hand widthwise direction, and "HC" denotes the hand height direction.

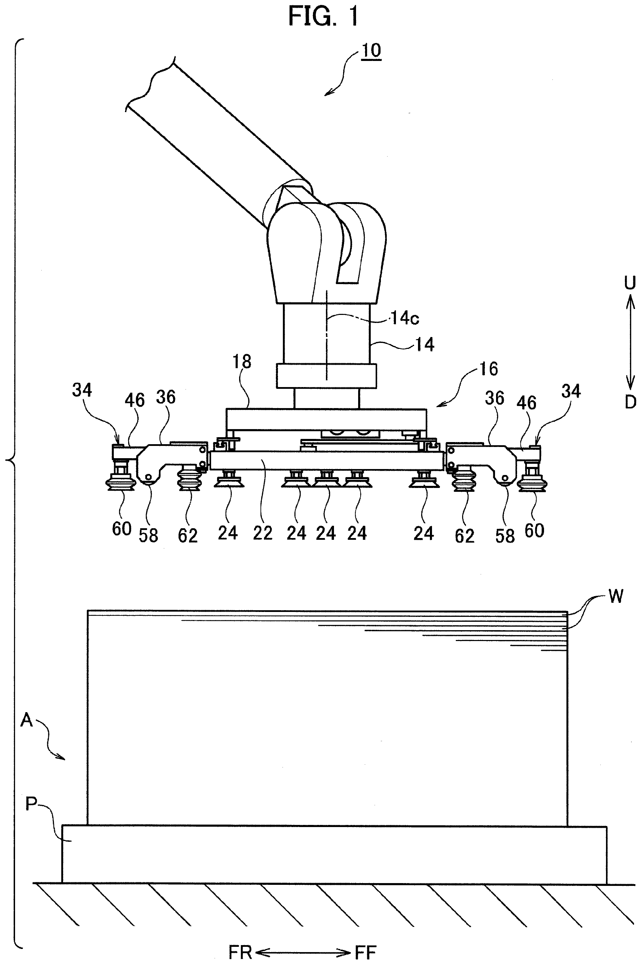

As illustrated in Figure 1, an articulated robot 10 according to an embodiment is a robot that performs assist and the like of bending of a press brake (not illustrated) disposed behind a stacking area A. Also, the articulated robot 10 is one of transport devices that transport plate-shaped workpieces W stacked in the stacking area A via a pallet P in the back direction that is the transport direction.

The articulated robot 10 includes an articulated robot arm 12, and the robot arm 12 has a wrist 14 on the side of the distal end portion thereof. The wrist 14 is configured to be rotatable about an axial center 14c thereof. Also, a robot hand 16 to hold the workpieces W is detachably provided at the distal end portion of the wrist 14. In other words, the robot hand 16 is detachably attached to the distal end portion of the articulated robot 10. Note that the configuration of the articulated robot 10 except for the configuration of the robot hand 16 is the same as the configuration of the articulated robot described in Patent Literature 3 and detailed description of the configuration will be omitted.

Next, a specific configuration of the robot hand 16 according to an embodiment will be described.

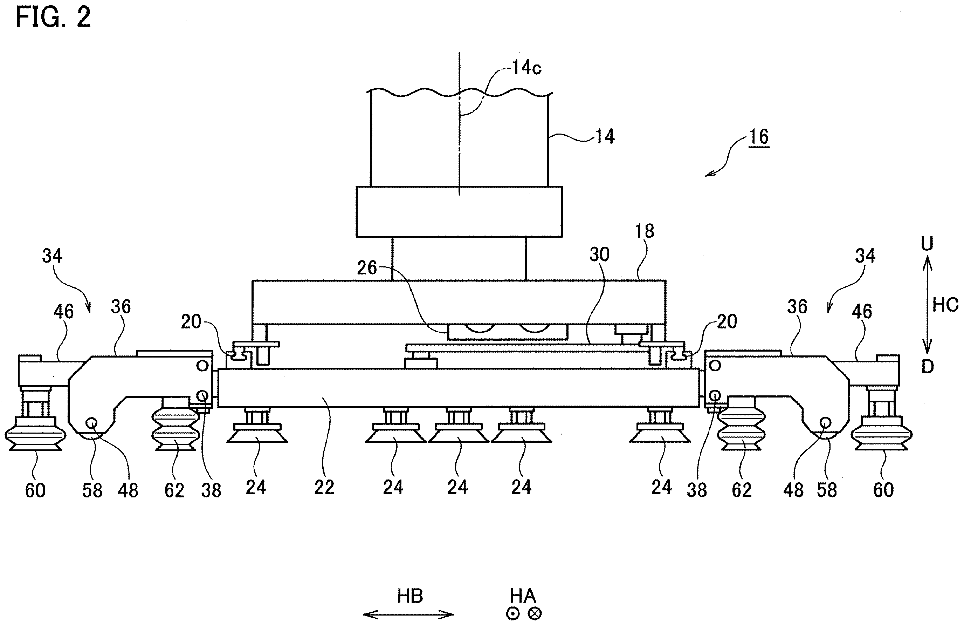

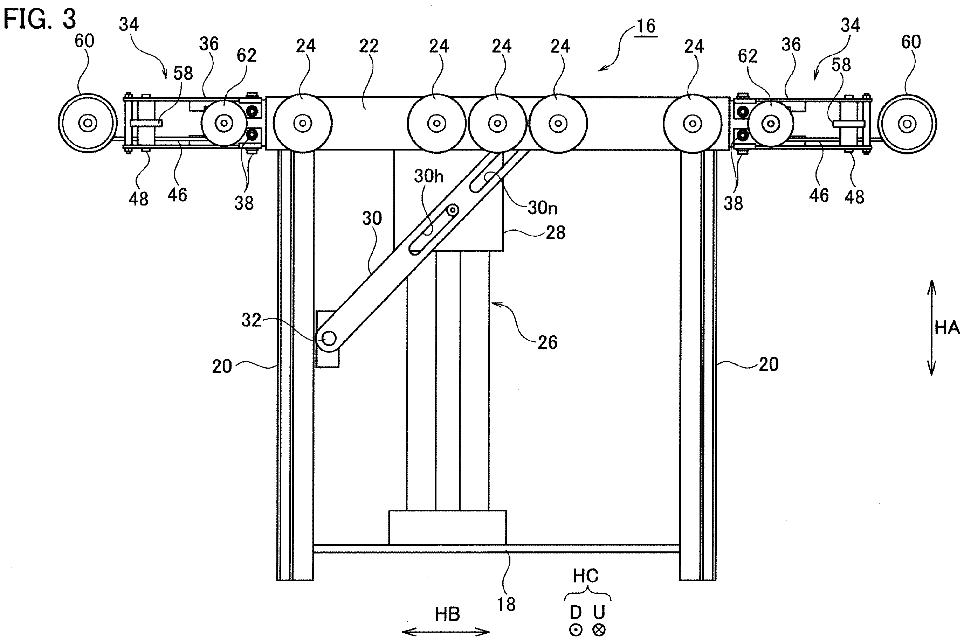

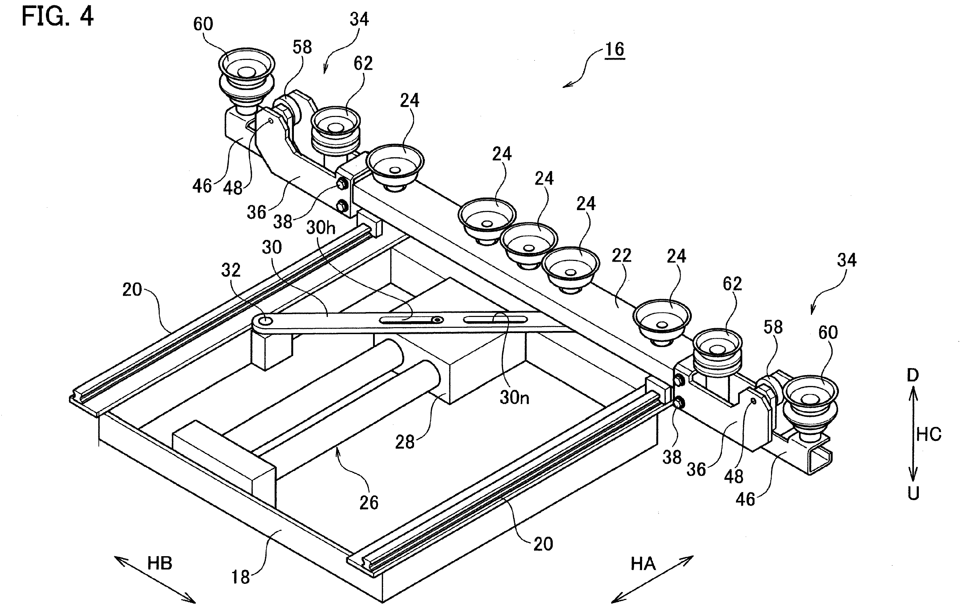

As illustrated in Figures 1 to 4, the robot hand 16 includes a tray-shaped hand body 18, and the hand body 18 is detachably attached to the distal end portion of the wrist 14 that is the distal end portion of the articulated robot 10. The hand body 18 corresponds to a carrier of a transport device, can advance and retreat in the transport direction, and can be lifted and lowered (can substantially vertically move up and down).

The hand body 18 includes a pair of guide rails 20, and each of the guide rails 20 extends in the hand lengthwise direction near each of both ends of the hand body 18 in the hand widthwise direction. A pad support member 22 extending in the hand widthwise direction is supported by the pair of guide rails 20 so as to be able to move in the hand lengthwise direction. The pad support member 22 includes a plurality of flat-shaped main pads 24 to suck a surface of a workpiece W provided at intervals in the hand widthwise direction. In other words, the hand body 18 includes the plurality of flat-shaped main pads 24 provided via the pair of guide rails 20 and the pad support member 22. The plurality of main pads 24 are connected to a suctioning pump (not illustrated) as an air suctioning source.

At the center of the hand body 18, a rodless cylinder 26 that causes the pad support member 22 to move in the hand lengthwise direction is provided. The rodless cylinder 26 has a movable block 28 that can move in the hand lengthwise direction. Also, a proximal end portion of a swinging link (coupling link) 30 that swings in the hand lengthwise direction is coupled to the hand body 18 on one end side in the hand widthwise direction via a coupling pin 32. The swinging link 30 on the side of the distal end portion is coupled to the pad support member 22 via a long hole 30h or the like. The swinging link 30 on the side of the intermediate portion is coupled to the movable block 28 via a long hole 30v. Note that the purpose of causing the pad support member 22 to move in the hand lengthwise direction is to change adsorption positions of the plurality of main pads 24 during bending of the workpiece W, and description of operations and the like of the rodless cylinder 26 will be omitted.

The pad support member 22 is provided with a detector (not illustrated) to detect that the main pads 24 have come into contact with or have been located in proximity to the surface of the workpiece W at the top of the workpieces W stacked in the stacking area A. The detector has a contact pin that is provided at the pad support member 22 so as to be movable in the hand height direction and that comes into contact with the surface of the workpiece W at the top prior to the main pads 24, similarly to the detector described in Patent Literature 3. The detector has a dog provided on the proximal end side of the contact pin and a sensor provided at the hand support member 22 to detect proximity of the dog. If the state in which the main pads 24 have come into contact with or have been located in proximity to the surface of the workpiece W at the top is detected, then driving of the suctioning pump is started.

The pad support member 22 includes a pair of picking-up units 34 to pick up the workpiece W at the top of the workpieces W stacked in the stacking area A one by one. Each of the picking-up units 34 is supported near each of both ends of the hand body 18 when seen in the hand widthwise direction, and more specifically, each of the picking-up units 34 is supported via the pad support member 22. In addition, a specific configuration of the picking-up unit 34 is as follows.

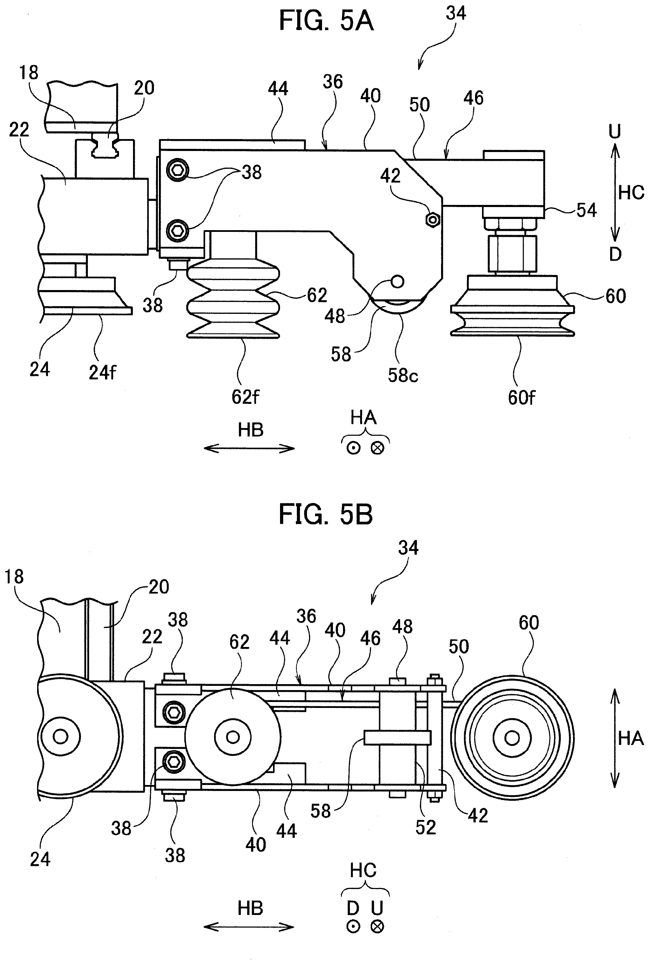

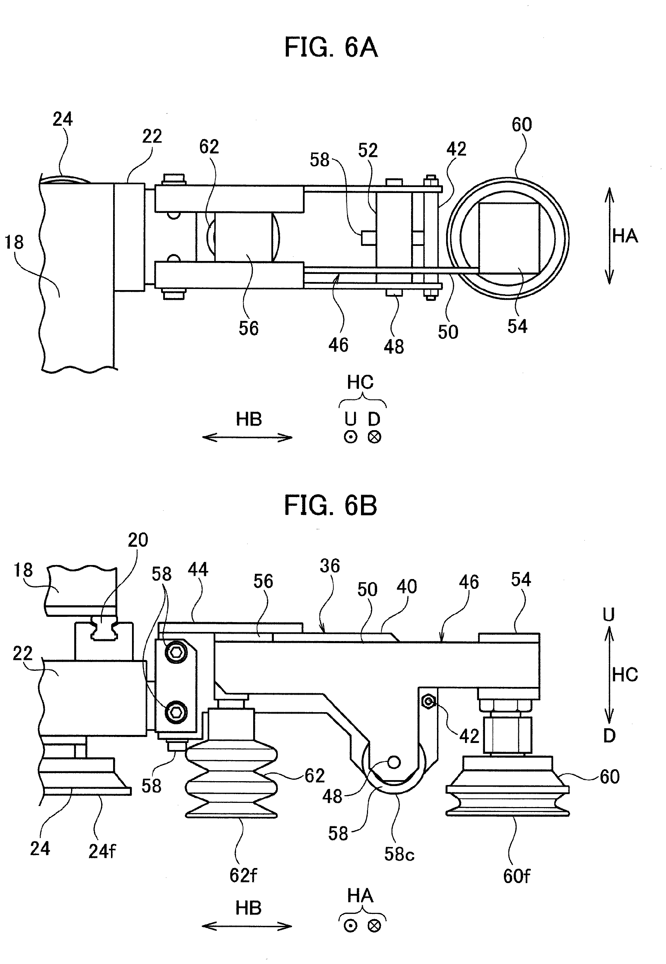

As illustrated in Figures 5A to 7B, connection members 36 are detachably attached near both ends of the pad support member 22 using a plurality of attachment bolts 38. In other words, the connection members 36 are detachably attached near both ends of the hand body 18 in the hand widthwise direction via the pad support member 22. Also, each connection member 36 has a pair of L-shaped securing plates 40, and the pair of securing plates 40 face each other in the hand lengthwise direction. The distal end portions of the pair of securing plates 40 are integrally coupled to each other with a coupling shaft 42. A projecting flange 44 extending in the hand lengthwise direction is provided at each of the securing plates 40 on the side of the proximal end portions.

A swinging member 46 is axially supported between the pair of securing plates 40 so as to be able to swing with a swinging shaft 48. The swinging member 46 has a structure like a seesaw, in which the swinging member 46 has the swinging shaft 48 as a support point and swings around the swinging shaft 48. In other words, the swinging member 46 is provided at the hand body 18 on the side of each end portion in the hand widthwise direction via the pad support member 22 and the connection member 36 so as to be able to swing with the swinging shaft 48. Also, the swinging member 46 has a T-shaped swinging plate 50, and the swinging plate 50 projects outward in the hand widthwise direction from the connection member 36.

A U-shaped support block (rotation support portion) 52 is provided on the side of the center of the swinging plate 50, and the swinging shaft 48 penetrates through the support block 52. A first attachment piece (first attachment portion) 54 is provided at an end portion of the swinging plate 50 on the opposite side of the hand body 18. A second attachment piece (second attachment portion) 56 is provided at an end portion of the swinging plate 50 on the side of the hand body 18. The second attachment piece 56 can abut on the projecting flange 44 due to a gravity force working on the side of the first attachment piece 54. In other words, the swinging member 46 is configured such that swinging thereof in one direction is restricted by abutting between the second attachment piece 56 and the projecting flange 44.

A contact roller 58 as a contact element that comes into contact with the surface of the workpiece W is provided at the support block 52 so as to be able to rotate about the axial center of the swinging shaft 48 with a bearing (not illustrated). In other words, the contact roller 58 is provided near the center of the swinging member 46, for example, so as to be able to rotate about the axial center of the swinging shaft 48 such that the contact roller 58 swings along with the swinging member 46. The contact roller 58 is configured of an elastic element such as a silicone rubber, for example. The position of a contact portion 58c of the contact roller 58 in the hand height direction is the same as the position of adsorption surfaces 24f of the main pads 24 in the hand height direction. The contact roller 58 comes into contact with the surface of the workpiece W at the top of the workpieces W stacked in the stacking area A substantially at the same time with the main pads 24.

The first attachment piece 54 is provided with a two-branched bellows-type first auxiliary pad 60 to suck the surface of the workpiece W on the side of an end portion. The first auxiliary pad 60 is provided near the end portion of the swinging member 46 located distally as compared with the swinging shaft 48 when seen from the hand body 18. Also, the second attachment piece 56 is provided with a three-branched bellows-type second auxiliary pad 62 to suck the surface of the work piece W on the side of an end portion. The second auxiliary pad 62 is provided near the end portion of the swinging member 46 located proximally as compared with the swinging shaft 48 when seen from the side of the hand body 18.

Each of the first and second auxiliary pads 60 and 62 can contract in the longitudinal directions thereof or toward the workpiece W. On the assumption that differences between the lengths thereof in a free state and the lengths thereof when the first and second auxiliary pads 60 and 62 have contracted to the maximum extent are defined as stroke amounts, the stroke amount of the second auxiliary pad 62 is larger than the stroke amount of the first auxiliary pad 60.

The first auxiliary pad 60 and the second auxiliary pad 62 come into contact with the surface of the workpiece W prior to the plurality of main pads 24 and the contact roller 58. The first auxiliary pad 60 and the second auxiliary pad 62 are connected to the suctioning pump similarly to the plurality of main pads 24. Note that the first auxiliary pad 60 may have a flat shape.

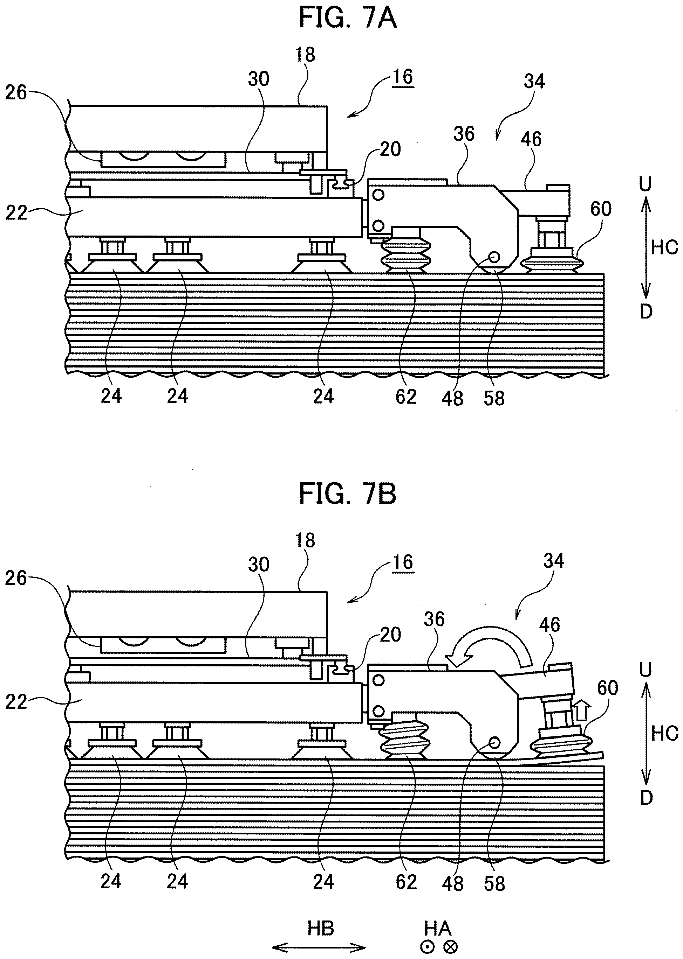

As described above, if a state in which the main pads 24 have come into contact with or have been located in proximity to the surface of the workpiece W at the top of the workpieces W stacked in the stacking area A is detected, then the driving of the suctioning pump is started. In other words, the adsorption operations of each main pad 24, the first auxiliary pad 60, and the second auxiliary pad 62 are started in a state in which the contact roller 58 is in contact with or is located in proximity to the surface of the workpiece W at the top. Also, as illustrated in Figure 7B, the picking-up unit 34 is configured such that if the adsorption operations of each main pad 24 and the like are started in that state, the first auxiliary pad 60 is lifted by the swinging of the swinging member 46 with the second auxiliary pad 62 contracting. Note that before the driving of the suctioning pump is started, the second attachment piece 56 abuts on the projecting flange 44, and an adsorption surface 58f of the first auxiliary pad 60 and an adsorption surface 60f of the second auxiliary pad 62 are parallel to the adsorption surfaces 24f of the main pads 24.

Next, operations and effects of the embodiment will be described.

The robot hand 16 (hand body 18) is caused to move in the front direction (the opposite direction of the transport direction) through control of operations of the articulated robot 10 and is then positioned right above the stacking area A. Next, the robot hand 16 is lowered through control of operations of the articulated robot 10, and the plurality of main pads 24 and the contact roller 58 are brought into contact with or are located in proximity to the surface of the workpiece W at the top of the workpieces W stacked in the stacking area A. Then, the sucking operations of each main pad 24, the first auxiliary pad 60, and the second auxiliary pad 62 are started in that state. Then, each first auxiliary pad 60 is lifted through the swinging of each swinging member 46 with each second auxiliary pad 62 contracting. As a result, the workpiece W at the top is rolled up on the sides of both end portions and is then partially separated from the other workpieces W. Further, the robot hand 16 is lifted through control of operations of the articulated robot 10 to pick up the workpiece W at the top one by one. Thereafter, the robot hand 16 is caused to move in the back direction (transport direction) through control of operations of the articulated robot 10, and the workpiece W is transported in the back direction and is then supplied to the press brake.

In other words, according to the embodiment, it is possible to pick up the workpiece W at the top one by one by the articulated robot 10 without using a specially designed actuator. Therefore, according to the embodiment, it is possible to curb an increase in drive sources such as actuators used for the articulated robot 10 as a transport device and thereby to simplify the configuration of the articulated robot 10 (transport device). Also, it is possible to curb an increase in inertial force working on the hand body 18 as a carrier during transport of the workpiece W and thereby to determine a transport position of the workpiece W at a high speed with high precision.

Note that in regard to the above disclosure, technical ideas applied to the articulated robot 10 can be applied to various devices such as a transport device (not illustrated) other than the articulated robot 10, for example.

### Industrial Applicability

A transport device for picking up and transporting stacked workpieces such as metal plates one by one and a unit for the transport device are provided.

## Claims

1. A transport device (10) comprising:
a carrier (18) capable of advancing and retreating in a transport direction and capable of being lifted and lowered;
a main pad (24) coupled to the carrier (18) and configured to suck a workpiece (W);
a swinging member (46) axially supported by the carrier (18) so as to be able to swing around a swinging shaft (48);
a contact element (58) configured to be lifted and lowered along with the carrier (18) and come into contact with the workpiece (W);
a first auxiliary pad (60) supported by the swinging member (46) at a position distal to the carrier (18) as compared with the swinging shaft (48) and configured to suck the workpiece (W), the first auxiliary pad (60) being able to contract toward the workpiece (W); and
a second auxiliary pad (62) supported by the swinging member (46) at a position proximal to the carrier (18) as compared with the swinging shaft (48) and configured to suck the workpiece (W),
**characterized in that**
the second auxiliary pad (62) is able to contract toward the workpiece (W) by a stroke amount larger than a stroke amount of the first auxiliary pad (60).

2. The transport device (10) according to claim 1, wherein the first auxiliary pad (60) is configured to be lifted by swinging of the swinging member (46) with the second auxiliary pad (62) contracting if sucking operations of the main pad (24), the first auxiliary pad (60), and the second auxiliary pad (62) are started in a state in which the contact element (58) is brought into contact with or is located in proximity to the workpiece (W) at a top of stacked workpieces (W).

3. The transport device (10) according to claim 1 or 2, further comprising:
a connection member (36) detachably attached to the carrier (18),
wherein the swinging member (46) is supported by the carrier (18) via the connection member (36).

## Patentansprüche

1. Transportvorrichtung (10), umfassend:
einen Träger (18), der sich in einer Transportrichtung vorwärtsbewegen und zurückbewegen kann und angehoben und abgesenkt werden kann;
ein Hauptpolster (24), das mit dem Träger (18) gekoppelt ist und konfiguriert ist, ein Werkstück (W) anzusaugen;
ein Schwenkelement (46), das von dem Träger (18) axial getragen wird, um um eine Schwenkwelle (48) schwenkbar zu sein;
ein Kontaktelement (58), das konfiguriert ist, zusammen mit dem Träger (18) angehoben und abgesenkt zu werden und in Kontakt mit dem Werkstück (W) zu kommen;
ein erstes Hilfspolster (60), das von dem Schwenkelement (46) an einer Position getragen wird, die im Vergleich zu der Schwenkwelle (48) distal bezüglich des Trägers (18) ist und konfiguriert ist, das Werkstück (W) anzusaugen, wobei sich das erste Hilfspolster (60) in Richtung des Werkstücks (W) zusammenziehen kann; und
ein zweites Hilfspolster (62), das von dem Schwenkelement (46) an einer Position getragen wird, die im Vergleich zu der Schwenkwelle (48) proximal bezüglich des Trägers (18) ist und konfiguriert ist, das Werkstück (W) anzusaugen,
**dadurch gekennzeichnet, dass**
sich das zweite Hilfspolster (62) in Richtung des Werkstücks (W) um einen Hubbetrag zusammenziehen kann, der größer als ein Hubbetrag des ersten Hilfspolsters (60) ist.

2. Die Transportvorrichtung (10) nach Anspruch 1, wobei das erste Hilfspolster (60) konfiguriert ist, durch ein Schwenken des Schwenkelements (46) angehoben zu werden, wobei sich das zweite Hilfspolster (62) zusammenzieht, wenn Ansaugvorgänge des Hauptpolsters (24), des ersten Hilfspolsters (60) und des zweiten Hilfspolsters (62) in einem Zustand gestartet werden, in welchem das Kontaktelement (58) in Kontakt mit dem obersten Werkstück (W) von gestapelten Werkstücken (W) gebracht wird oder in der Nähe davon angeordnet ist.

3. Die Transportvorrichtung (10) nach Anspruch 1 oder 2, ferner umfassend:
ein Verbindungselement (36), das lösbar an dem Träger (18) angebracht ist,
wobei das Schwenkelement (46) von dem Träger (18) über das Verbindungselement (36) getragen wird.

## Revendications

1. Dispositif de transport (10) comprenant :
un dispositif de support (18) capable d'avancer et de reculer dans un sens de transport et capable d'être levé et abaissé ;
un patin principal (24) couplé au dispositif de support (18) et configuré pour aspirer une pièce à usiner (W) ;
un élément oscillant (46) supporté axialement par le dispositif de support (18) de manière à pouvoir osciller autour d'un arbre oscillant (48) ;
un élément de contact (58) configuré pour être levé et abaissé avec le dispositif de support (18) et entrer en contact avec la pièce à usiner (W) ;
un premier patin auxiliaire (60) supporté par l'élément oscillant (46) à une position distale du dispositif de support (18) par rapport à l'arbre oscillant (48) et configuré pour aspirer la pièce à usiner (W), le premier patin auxiliaire (60) pouvant se contracter en direction de la pièce à usiner (W) ; et
un deuxième patin auxiliaire (62) supporté par l'élément oscillant (46) à une position proximale du dispositif de support (18) par rapport à l'arbre oscillant (48) et configuré pour aspirer la pièce à usiner (W),
**caractérisé par le fait que** le deuxième patin auxiliaire (62) peut se contracter vers la pièce à usiner (W) d'une course supérieure à la course du premier patin auxiliaire (60).

2. Dispositif de transport (10) selon la revendication 1, dans lequel le premier patin auxiliaire (60) est configuré pour être levé par le balancement de l'élément oscillant (46) avec le deuxième patin auxiliaire (62) se contractant si les opérations d'aspiration du patin principal (24), du premier patin auxiliaire (60) et du deuxième patin auxiliaire (62) sont lancées dans un état dans lequel l'élément de contact (58) est mis en contact avec ou est situé à proximité de la pièce à usiner (W) à un sommet de pièces à usiner (W) empilées.

3. Dispositif de transport (10) selon la revendication 1 ou 2, comprenant en outre :
un élément de connexion (36) fixé de manière amovible au dispositif de support (18),
dans lequel l'élément oscillant (46) est soutenu par le dispositif de support (18) par l'intermédiaire de l'élément de connexion (36).
